# EUROPÄISCHE PATENTSCHRIFT

(11) **EP 4 382 367 B1**
(45) Veröffentlichungstag und Bekanntmachung des Hinweises auf die Patenterteilung: **11.02.2026**
(21) Anmeldenummer: 22212162.6
(22) Anmeldetag: 08.12.2022
(51) Int. Cl.: B60R 19/34, F16F 7/12

(54) **DEFORMATIONSPROFIL DIE**
DEFORMATION PROFILE
PROFILÉ DÉFORMABLE

(43) Veröffentlichungstag der Anmeldung: 12.06.2024
(73) Patentinhaber: AUDI AG, 85057 Ingolstadt (DE)
(72) Erfinder: Rabl, Stephan, 85051 Ingolstadt (DE)

(56) Entgegenhaltungen:
- EP-A1- 2 572 941
- CN-A- 112 874 459
- DE-A1- 102004 002 948
- DE-A1- 102014 115 887
- DE-A1- 102018 114 174

## Beschreibung

Die vorliegende Erfindung betrifft ein Deformationsprofil gemäß den Merkmalen im Oberbegriff von Anspruch 1 sowie eine Deformationsprofilanordnung und eine Stoßfängeranordnung mit einem solchen Deformationsprofil.

Deformationsprofile, insbesondere Crashboxen basierend auf Hohlkammerprofilen, sind aus dem Stand der Technik bekannt. Deformationsprofile sind zumeist Teil von Stoßfängeranordnungen, die frontseitig oder endseitig an einem Kraftfahrzeug angeordnet sind.

Entsprechende Stoßfängeranordnungen weisen zumeist einen Querträger auf, der sich im Wesentlichen in Kraftfahrzeugquerrichtung erstreckt und zumeist eine Breite aufweist, die im Wesentlichen dem Kraftfahrzeug selbst entspricht bzw. geringfügig kleiner ist. Ein solcher Querträger ist über Deformationsprofile mit dem Kraftfahrzeug gekoppelt. Im Falle einer vorderen Stoßfängeranordnung sind die Deformationsprofile zumeist frontseitig am Längsträger angeordnet. Der Querträger und die Deformationsprofile sind in der Regel separat voneinander hergestellte Bauteile, die miteinander gefügt werden. Als bekannteste Varianten sind Schraubverbindungen oder Schweißverbindungen bekannt.

Im Falle eines Aufpralls des Kraftfahrzeuges auf einen Gegenstand werden die Deformationsprofile verformt bzw. ziehharmonikaähnlich zusammengedrückt und so Bewegungsenergie in Umformarbeit umgewandelt.

Um die Verformungsrichtung und die für die Verformung erforderliche Kraft zu steuern, können Löcher oder in Einbaulage am Fahrzeug quer zur Fahrtrichtung verlaufende Schlitze an Seitenwänden oder Ober- und Unterwand vorgesehen werden. Andererseits ist es auch bekannt, dass stattdessen Sicken in die Seitenwände der Deformationsprofile eingeformt werden. Die Ober- und/oder Unterwand der Deformationsprofile sind hingegen als ebene Fläche ausgebildet, um eine Kopplung mit zusätzlichen Anbauteilen zu ermöglichen. Beim Verprägen der Sicken in die Seitenwände der Deformationsprofile entstehen umformbedingte Wülste bzw. Ausbuchtungen, die über die Ober- und/oder Unterwand überstehen. Mithin wird die Kopplung von zusätzlichen Anbauteilen an der Ober- und/oder Unterwand des Deformationsprofils erschwert. Zusätzlich wird die ebene Fläche der Ober- und/oder Unterwand verkleinert.

Aus der DE 10 2014 115 887 A1 ist ein gattungsbildendes Deformationsprofil bekannt. DE 10 2004 002 948 A1 und EP 2 572 941 A1 zeigen Deformationsprofile mit Fasen zwischen den Seitenwänden.

Aufgabe der vorliegenden Erfindung ist es, ein Deformationsprofil sowie eine Stoßfängeranordnung bereitzustellen, bei dem trotz der eingangs genannten Sickenanordnung an den Seitenwänden ein Anbauteil mit der Ober- und/oder Unterwand insbesondere flächig anliegend koppelbar ist.

Die zuvor genannte Aufgabe wird erfindungsgemäß bei einem Deformationsprofil mit den Merkmalen im Anspruch 1 gelöst.

Vorteilhafte Ausgestaltungsvarianten sind Gegenstand der abhängigen Ansprüche.

Das erfindungsgemäße Deformationsprofil weist zwei gegenüberliegende Seitenwände auf, welche durch eine Oberwand und eine Unterwand verbunden sind. Das Deformationsprofil ist insbesondere als im Querschnitt rechteckiges bzw. quadratisches Bauteil ausgebildet. Bevorzugt ist das Deformationsprofil eine Crashbox, insbesondere eine Mehrkammercrashbox. Alternativ kann das Deformationsprofil auch ein Längsträger sein. Bei einem Längsträger kann es sich um ein im Vorderwagen eines Kraftfahrzeugs angeordnetes Bauteil, also einen vorderen Längsträger oder um ein im Hinterwagen eines Kraftfahrzeugs angeordnetes Bauteil, also um einen hinteren Längsträger handeln.

Die beiden Seitenwände weisen jeweils wenigstens eine sich über die gesamte Höhe der jeweiligen Seitenwand erstreckende Sicke auf. Durch die Sicken kann der Faltvorgang des Deformationsprofils gesteuert und vergleichmäßigt werden. Zwischen den Seitenwänden und der Oberwand ist jeweils ein oberer Eckbereich ausgebildet. Zwischen den Seitenwänden und der Unterwand ist jeweils ein unterer Eckbereich ausgebildet. Über die Eckbereiche sind die Seitenwände mit der Oberwand bzw. der Unterwand verbunden.

Erfindungsgemäß zeichnet sich das Deformationsprofil nunmehr dadurch aus, dass die oberen Eckbereiche und/oder die unteren Eckbereiche im Querschnitt eine Fase aufweisen. Insbesondere bei im Querschnitt rechteckigen Deformationsprofilen entstehen beim Einprägen der Sicken in die Seitenwände Wülste, die über die Ober- und/oder Unterwand hinausragen können. Dies führt zu einer Unebenheit der Ober- und/oder Unterwand. Indem die oberen und/oder die unteren Eckbereiche im Querschnitt eine Fase aufweisen, verbleiben die Wülste innerhalb der Eckbereiche und ragen nicht mehr über die Oberwand bzw. die Unterwand hinaus. So wird die ebene Fläche der Ober- und/oder Unterwand nicht beeinträchtigt. Die verbleibende ebene Fläche der Oberwand und/oder Unterwand ist somit für die Kopplung mit einem zusätzlichen Anbauteil geeignet.

Das Deformationsprofil ist ein einteiliges stranggepresstes Extrusionsprofil. Die beiden Seitenwände, die Oberwand und die Unterwand und gegebenenfalls eine oder mehrere Mittelwände sind werkstoffeinheitlich einstückig stranggepresst.

Die erfindungsgemäße Ausgestaltung der Eckbereiche kann entweder nur im oberen Bereich des Deformationsprofils, nur im unteren Bereich des Deformationsprofils oder in beiden Bereichen ausgebildet sein. Weisen nur die beiden oberen Ecken des oberen Eckbereichs im Querschnitt eine Fase auf, ist die Fläche der Oberwand entsprechend plan und vergrößert und somit für die Kopplung eines zusätzlichen Anbauteils geeignet. Gleiches gilt im Falle einer erfindungsgemäßen Ausführung nur der unteren Eckbereiche analog für die Unterwand. Besonders bevorzugt weisen sowohl die oberen Eckbereiche als auch die unteren Eckbereiche im Querschnitt eine eine Fase auf, so dass sowohl die Oberwand als auch die Unterwand nicht durch überstehende Wülste beeinträchtigt werden, und sich ein möglichst symmetrisches Faltverhalten bei einem Aufprallergebnis einstellt.

Eine für die Praxis besonders vorteilhafte Ausführungsform sieht vor, dass ein Deformationsprofil zwei Sicken gegenüberliegend in den Seitenwänden aufweist, wobei die beiden einander gegenüberliegenden Sicken im gleichen Längenabschnitt des Deformationsprofils angeordnet sind. Die beiden Sicken liegen sich diametral gegenüber. Das Deformationsprofil ist spiegelbildlich zur vertikalen Mittellängsebene ausgestaltet. Ein solches Deformationsprofil zeichnet sich durch ein symmetrisches Faltverhalten aus, insbesondere bei einem Anprall bzw. Stoß axial in Längsrichtung des Deformationsprofils.

Erfindunggemäß ist ein Fasenwinkel α zwischen 25° und 65°, bevorzugt zwischen 40° und 50° ausgebildet. Das heißt, die Fase ist zu einer Oberwand oder Unterwand und der sich erschließenden Seitenwand in einem Winkel von vorzugsweise zwischen 40° und 50° verlaufend.

Für den oberen Eckbereich liegt der Fasenwinkel zwischen der Fase und einer Oberwandebene bzw. Horizontalebene. Für den unteren Bereich liegt der Fasenwinkel zwischen der Fase und einer Unterwandebene bzw. Horizontalebene vor.

Weiterhin weist die Fase im Querschnitt eine Länge zwischen 12 mm und 25 mm auf.

Die Oberwand und/oder die Unterwand weist eine äußere Gesamtfläche auf. Die Gesamtfläche umfasst die sich in einer Horizontalebene planparallel zur Horizontalen erstreckende Planfläche und den bzw. die durch die Eckbereiche geneigte zur Horizontalen verlaufenden Flächenanteile der Eckbereichsflächen. Im Rahmen der Erfindung ist vorgesehen, dass der Anteil der Planfläche an der Gesamtfläche einer Oberwand und/oder einer Unterwand 30 % bis 65 % beträgt.

Die Planfläche ist eingerichtet und bestimmt um zumindest ein zusätzliches Anbauteil am Deformationsprofil festzulegen.

Die Fasenbreite beträgt bevorzugt kleiner als ein Drittel insbesondere kleiner als ein Viertel der Crashbox-Breite. Dies trägt zum Erreichen einer großen Planfläche bei.

Zusätzlich zur erfindungsgemäßen Ausführung der Eckbereiche als Fase können die nicht als Fase ausgebildeten oberen oder unteren Eckbereiche eine konkave Form aufweisen.

Im Falle einer konkaven Ausführung der Eckbereiche weist die konkave Form bevorzugt einen Radius zwischen 12 mm und 25 mm auf. Bevorzugt beträgt der Radius zwischen 13 mm und 20 mm. In diesem Zusammenhang kann es zweckmäßig sein, wenn der Radius kleiner als ein Drittel bevorzugt kleiner als ein Viertel der Crashbox-Breite beträgt. Auch diese Maßnahme stellt einen möglichst großen Anteil der Planfläche an der äußeren Gesamtfläche der Oberwand und/oder der Unterwand sicher.

Das Deformationsprofil selbst hat vorzugsweise eine Wandstärke zwischen 0,5 mm und 4 mm, insbesondere zwischen 1 mm und 3 mm.

Sofern nur die oberen Eckbereiche oder nur die unteren Eckbereiche erfindungsgemäße Fasen aufweisen, haben die übrigen Eckbereiche des Deformationsprofils keine Fase. Insbesondere bedeutet keine Fase bzw. keine konkave Form, dass diese Ecken eine Fase aufweisen, die mindestens 20 %, insbesondere 33 % und bevorzugt mindestens 50 % kleiner sind in Relation zu den erfindungsgemäßen Eckbereichen mit einer Fase.

Vorzugsweise ist die Oberwand und/oder die Unterwand plan ausgebildet. Durch eine entsprechend plane Ausbildung wird die Kopplung mit einem zusätzlichen Bauteil deutlich vereinfacht. Bevorzugt ist die Oberwand und die Unterwand nicht nur im Längenabschnitt mit der bzw. den Sicken in der Seitenwand (Seitenwandsicken) plan, sondern über die gesamte Länge des Deformationsprofils, so dass sich eine großflächige plane Anbindungsfläche ergibt.

Das Deformationsprofil kann mittels Strangpressen hergestellt sein und ist bevorzugt aus einem Leichtmetallwerkstoff, besonders bevorzugt aus einer Aluminiumlegierung ausgebildet.

Bevorzugt ist das Deformationsprofil Teil einer Stoßfängeranordnung eines Kraftfahrzeuges. In diesem Fall kann das Deformationsprofil mittels Schrauben oder einer Schweißnaht mit einer Flanschplatte oder direkt mit einem Querträger verbunden sein. Ergänzend kann das Deformationsprofil mit dem Längsträger verschraubt sein.

Die erfindungsgemäße Deformationsprofilanordnung umfasst ein erfindungsgemäßes Deformationsprofil sowie ein zusätzliches Anbauteil. Die Deformationsprofilanordnung zeichnet sich nunmehr dadurch aus, dass das Anbauteil lösbar oder unlösbar mit der Oberwand oder der Unterwand gekoppelt ist. Das erfindungsgemäße Deformationsprofil weist aufgrund der Ausbildung der Eckbereiche als Fase eine plane Oberwand und/oder Unterwand auf. Die Oberwand und/oder Unterwand verfügen somit über eine geeignete Kopplungsfläche für die Kopplung mit einem Anbauteil.

Anbauteile können beispielsweise Lastpfadstützen, Kühlerstützen, Scheinwerferhalter und ähnliche Funktions- und/oder Sicherheitsanbauteile sein.

Die erfindungsgemäße Anordnung kann auch zwei Anbauteile umfassen, dergestalt, dass ein Anbauteil lösbar mit der Oberwand und ein Anbauteil lösbar mit der Unterwand gekoppelt ist.

Bei einer Deformationsprofilanordnung handelt es sich insbesondere um eine Stoßfängeranordnung für ein Kraftfahrzeug. Die Stoßfängeranordnung weist einen Querträger auf, der über zwei erfindungsgemäße Deformationsprofile am Kraftfahrzeug insbesondere unmittelbar oder mittelbar an Längsträgern des Kraftfahrzeugs abgestützt ist. Der Querträger ist über die Deformationsprofile mit dem Fahrzeug verbunden, wobei die Deformationsprofile als Mehrkammerprofil ausgebildet sind und wenigstens eine Innenwand aufweisen. Die Innenwand erstreckt sich parallel zur Oberwand und Unterwand zwischen den beiden Seitenwänden. Die Innenwand weist in einem Längenabschnitt mit einer Sicke eine nach oben oder unten gerichtete Umformung in Form eines Buckels auf.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfacheren Verständnis der Erfindung. Es zeigen:
- Figur 1a: eine Perspektive eines aus dem Stand der Technik bekannten Deformationsprofils,
- Figur 1b: ein aus dem Stand der Technik bekanntes Deformationsprofil im Querschnitt gemäß dem Schnitt I-I der Figur 1a,
- Figur 2a: eine Perspektive eines erfindungsgemäßen Deformationsprofils,
- Figur 2b: ein erfindungsgemäßes Deformationsprofil im Querschnitt gemäß dem Schnitt II-II der Figur 2a,
- Figur 2c: ein erfindungsgemäßes Deformationsprofil im Querschnitt gemäß dem Schnitt III-III der Figur 2a,
- Figur 3a: ein erfindungsgemäßes Deformationsprofil im Querschnitt, wobei Figuren 3b und 3c keine erfindungsgemäße Ausbildung des Deformationsprofils zeigen, und
- Figur 4: eine erfindungsgemäße Deformationsprofilanordnung umfassend ein Deformationsprofil sowie ein Anbauteil.

In den Figuren werden für gleiche oder ähnliche Bauteile dieselben Bezugszeichen verwendet, auch wenn eine wiederholte Beschreibung aus Vereinfachungsgründen entfällt.

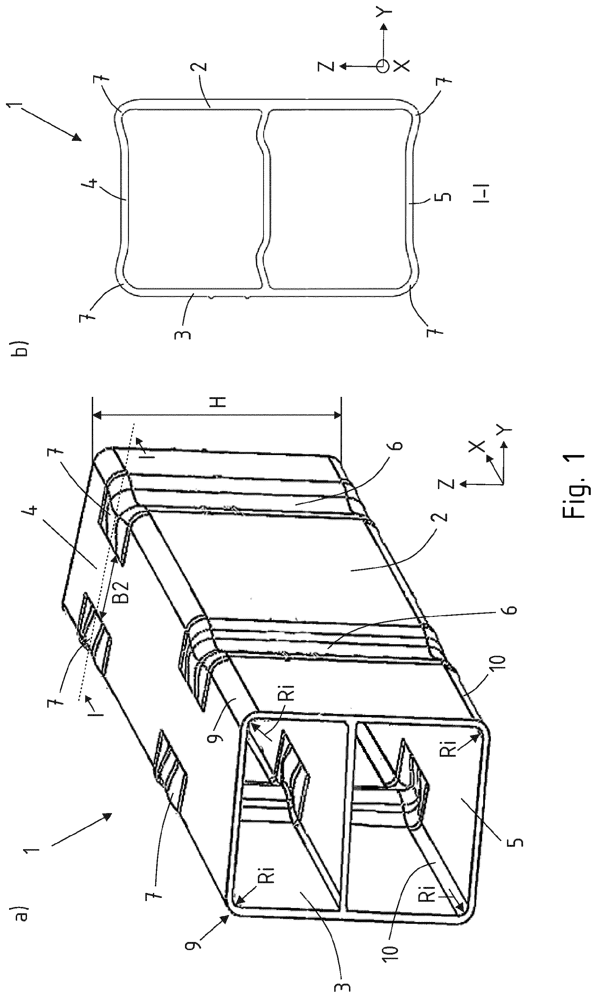

Die Figur 1a zeigt ein aus dem Stand der Technik bekanntes Deformationsprofil 1, bei dem es sich um eine als Zweikammerhohlprofil ausgebildete Crashbox handelt. Das Deformationsprofil 1 weist zwei gegenüberliegende Seitenwände 2, 3 auf, wobei die Seitenwände 2, 3 durch eine Oberwand 4 und eine Unterwand 5 verbunden sind. Das Deformationsprofil 1 weist im Querschnitt eine rechteckige Form auf. Die Bezeichnung Querschnitt bezieht sich dabei immer auf den Querschnitt in der y-z-Ebene. Beide Seitenwände 2, 3 weisen sich über ihre gesamte Höhe H erstreckende Sicken 6 auf. Durch die Verprägung der Sicken 6 weisen diese an den oberen und unteren Enden Wülste 7 auf, die über die Oberwand 4 und die Unterwand 5 hinausragen.

Figur 1b zeigt das aus dem Stand der Technik bekannte Deformationsprofil 1 im Querschnitt gemäß dem Schnitt I-I der Figur 1a, mithin den Schnitt durch die gegenüberliegenden Sicken 6. Hier ist deutlich zu erkennen, dass die Wülste 7 über die Oberwand 4 und die Unterwand 5 hinausragen. Sowohl die Oberwand 4 als auch die Unterwand 5 weisen im Längenabschnitt mit den Sicken 6 somit keine plane bzw. ebene Fläche auf, was die Kopplung eines hier zunächst nicht näher dargestellten Anbauteils 8 erschwert. Zwischen den Seitenwänden 2, 3 und der Oberwand 4 ist jeweils ein oberer Eckbereich 9 ausgebildet und zwischen den Seitenwänden 2, 3 und der Unterwand 5 ist jeweils ein unterer Eckbereich 10 ausgebildet. Die Eckbereiche sind konvex ausgebildet und weisen einen Radius Ri auf.

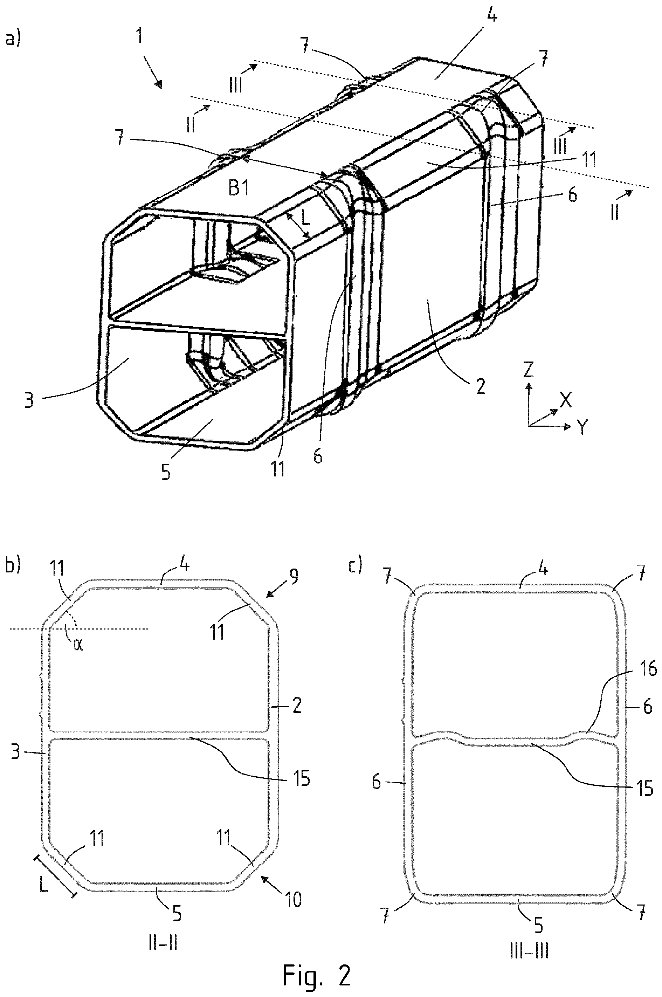

Figur 2a zeigt die Perspektive eines erfindungsgemäßen Deformationsprofils 1, bei dem es sich ebenfalls um eine als Zweikammerhohlprofil ausgebildete Crashbox handelt. Im Vergleich zum Deformationsprofil 1 gemäß Stand der Technik, dargestellt in Figur 1a, weisen die oberen Eckbereiche 9 und die unteren Eckbereiche 10 erfindungsgemäß im Querschnitt eine Fase 11 auf. Die durch das Verprägen der Sicken 6 entstandenen Wülste 7 führen zu einer Ausbeulung der Fase 11 nach außen. Durch die Fasen 11 wird jedoch sichergestellt, dass die Wülste 7 nicht über die Oberwand 4 und/oder die Unterwand 5 hinausragen. So wird die Kopplung mit einem zusätzlichen Anbauteils 8 aufgrund der weiterhin planen Oberwand 4 bzw. Unterwand 5 nicht behindert. Durch die Fasen 11 ist zudem die Breite B1 der Oberwand 4 und/oder der Unterwand 5 gegenüber der Breite B2 der Oberwand 4 und/oder der Unterwand 5 des Deformationsprofils 1 gemäß Stand der Technik erhöht. Somit ergibt sich eine größere Kopplungsfläche zur Kopplung mit einem zusätzlichen Anbauteil 8.

Figur 2b zeigt das erfindungsgemäße Deformationsprofil 1 im Querschnitt gemäß dem Schnitt II-II der Figur 2a. Die Fasen 11 weisen einen Fasenwinkel α von 45° auf.

Die Fasen 11 weisen zudem im Querschnitt eine Länge L zwischen 12 mm und 25 mm auf.

Figur 2c zeigt einen Querschnitt des erfindungsgemäßen Deformationsprofils 1 gemäß dem Schnitt III-III der Figur 2a. Hier ist nochmals deutlich zu sehen, dass die Wülste 7 nicht über die Oberwand 4 bzw. die Unterwand 5 hinausragen.

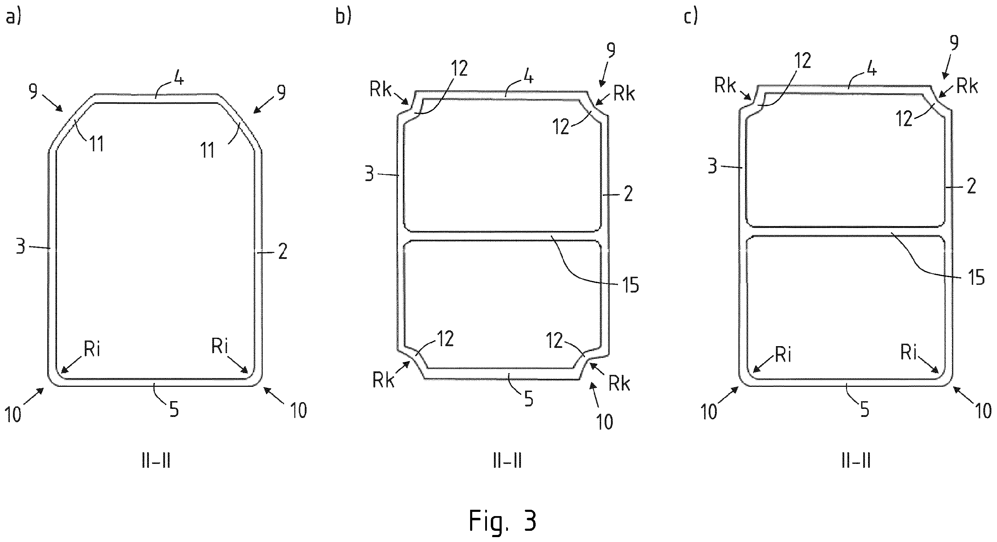

Die Figuren 3a bis 3c zeigen alternative Ausführungsvarianten des Deformationsprofils 1 im Querschnitt gemäß dem Schnitt II-II der Figur 2a, wobei sie das Ausgangsprofil bzw. einen Längenabschnitt ohne Sicken in den Seitenwänden darstellen.

Gemäß Figur 3a sind nur die oberen Eckbereiche 9 erfindungsgemäß als Fase 11 ausgeführt. Die unteren Eckbereiche 10 weisen eine konvexe Form mit einem Radius Ri auf. Durch die erfindungsgemäße Ausgestaltung der oberen Eckbereiche 9 ist in dieser Ausführungsvariante nur die Oberwand 4 für eine Kopplung mit einem zusätzlichen Anbauteil 8 geeignet.

In Figur 3b weisen die oberen Eckbereiche 9 und die unteren Eckbereiche 10 im Querschnitt eine konkave Form 12 auf. Auch durch die konkave Form 12 wird ein Überstehen der Wülste 7 über die Oberwand 4 bzw. die Unterwand 5 verhindert. Denn beim Einformen der Sicken 6 in die Seitenwände 2, 3 wird der Eckbereich 9, 10 durch die vorgegebene konkave Ausformung nach innen bzw. in die Mitte gedrückt. Zugleich wird die Innenwand lokal buckelartig nach oben oder unten verformt. Die konkave Form 12 weist einen Radius Rk zwischen 12 mm und 25 mm auf.

In der alternativen Ausführungsform gemäß Figur 3c weisen nur die oberen Eckbereiche 9 eine konkave Form 12 auf. Die unteren Eckbereiche 10 weisen eine konvexe Form mit einem Radius Ri auf. Während die oberen Eckbereiche 9 mit der konkaven Form 12 einen Radius Rk von 20 mm aufweisen, weisen die unteren konvex geformten Eckbereiche 10 einen Radius Ri von 10 mm auf. Somit ist der Radius Ri der nicht erfindungsgemäß ausgeführten unteren Eckbereiche 10 um 50 % kleiner als der Radius Rk der erfindungsgemäßen oberen Eckbereiche 9. Im nicht dargestellten Längenabschnitt gemäß dem Schnitt III-III mit Sicken ergibt sich nur in der Oberwand eine plane Anbindungsfläche.

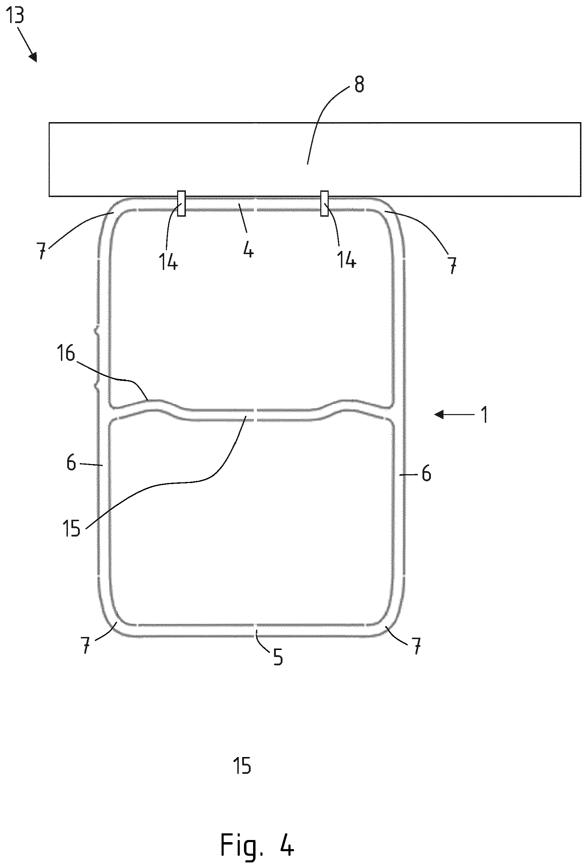

Figur 4 zeigt eine erfindungsgemäße Deformationsprofilanordnung 13, umfassend ein Deformationsprofil 1 sowie ein Anbauteil 8. Das Anbauteil 8 ist mittels Koppelmittel 14 lösbar mit der Oberwand 4 des Deformationsprofils 1 gekoppelt. Da die Wülste 7 nicht über die Oberwand 4 überstehen, kann das Anbauteil 8 möglichst nah und somit platzsparend am Deformationsprofil 1 bzw. an der Oberwand 4 angeordnet werden.

In einer alternativen Ausführungsvariante der Deformationsprofilanordnung 13 kann ein zusätzliches Anbauteil 8 mit der Unterwand 5 lösbar gekoppelt werden.

Die Deformationsprofile 1 gemäß den Darstellungen der Figuren 2 sowie 3b) und 3c) und Figur 4 sind als Mehrkammerprofil ausgebildet. In den dargestellten Deformationsprofilen 1 sind diese durch eine Innenwand 15 in zwei Kammern geteilt. Die Innenwand 15 erstreckt sich parallel zur Oberwand 4 und zur Unterwand 5 zwischen den beiden Seitenwänden 2, 3. Ein Deformationsprofil 1 kann auch mehr als eine Innenwand 15 aufweisen.

Die Innenwand 15 besitzt in einem Längenabschnitt mit einer Sicke 6 einen nach oben in Richtung zur Oberwand 4 gerichteten Buckel 16. Möglich ist auch, dass ein Buckel nach unten in Richtung zur Unterwand 5 ausgeformt ist.

Insbesondere betrifft die Erfindung auch eine Deformationsprofilanordnung in Form einer Stoßfängeranordnung für ein Kraftfahrzeug. Die Stoßfängeranordnung umfassend einen Querträger und zwei Deformationsprofile nach einem der Ansprüche 1 bis 7, durch welche der Querträger mit einem Fahrzeug verbunden ist, wobei die Deformationsprofile 1 als Mehrkammerprofil ausgebildet sind und wenigstens eine Innenwand 15 aufweisen, welche parallel zur Oberwand 4 und zur Unterwand 5 verläuft, wobei die Innenwand 15 im Längenabschnitt mit einer Sicke 6 einen nach oben oder unten gerichteten Buckel 16 aufweist.

Die Deformationsprofile 1 sind stranggepresst. Die Seitenwände 2, 3, die Oberwand 4 und die Unterwand 5 ebenso wie optionale Innenwände 15 sind einstückig werkstoffeinheitlich als Strangpressprofil ausgeführt.

Die Oberwand 4 und/oder die Unterwand 5 eines Deformationsprofils 1 weist eine äußere Gesamtfläche aufweist, welche eine sich in einer Horizontalebene planparallel zur Horizontalen erstreckende Planfläche und die in den Eckbereichen 9 und/oder in den Eckbereichen 10 geneigt zur Horizontalen verlaufende Eckbereichsflächen umfasst. Der Anteil der Planfläche an der Gesamtfläche beträgt 30 % bis 65 %.

### Bezugszeichen:

- 1 -: Deformationsprofil
- 2 -: Seitenwand
- 3 -: Seitenwand
- 4 -: Oberwand
- 5 -: Unterwand
- 6 -: Sicken
- 7 -: Wülste
- 8 -: Anbauteil
- 9 -: obere Eckbereiche
- 10 -: untere Eckbereiche
- 11 -: Fase
- 12 -: konkave Form
- 13 -: Deformationsprofilanordnung
- 14 -: Koppelmittel
- 15 -: Innenwand
- 16 -: Buckel

- H -: Höhe
- Ri -: Radius der konvexen Form
- Rk -: Radius der konkaven Form
- α -: Fasenwinkel

## Patentansprüche

1. Deformationsprofil (1), aufweisend zwei gegenüberliegende Seitenwände (2, 3), wobei die Seitenwände (2, 3) durch eine Oberwand (4) und eine Unterwand (5) verbunden sind und beide Seitenwände (2, 3) wenigstens eine sich über die gesamte Höhe (H) der jeweiligen Seitenwand (2, 3) erstreckende Sicke (6) aufweisen, wobei zwischen den Seitenwänden (2, 3) und der Oberwand (4) jeweils ein oberer Eckbereich (9) ausgebildet ist und zwischen den Seitenwänden (2, 3) und der Unterwand (5) jeweils ein unterer Eckbereich (10) ausgebildet ist, wobei das Deformationsprofil (1) stranggepresst ist, **dadurch gekennzeichnet, dass** die oberen Eckbereiche (9) und/oder die unteren Eckbereiche (10) im Querschnitt eine Fase (11) aufweisen, wobei die Fase (11) einen Fasenwinkel (α) zwischen 25° und 65° aufweist und die Fase (11) im Querschnitt eine Länge (L) zwischen 12 und 25 mm aufweist.

2. Deformationsprofil (1) nach Anspruch 1, **dadurch gekennzeichnet, dass** zwei Sicken (6) gegenüberliegend in den Seitenwänden (2, 3) und im gleichen Längenabschnitt ausgebildet sind.

3. Deformationsprofil (1) nach Anspruch 1 oder 2, **dadurch gekennzeichnet, dass** das Deformationsprofil (1) eine Crashbox, insbesondere eine Mehrkammercrashbox, oder ein Längsträger ist.

4. Deformationsprofil (1) nach einem der Ansprüche 1 bis 3, **dadurch gekennzeichnet, dass** die Fase (11) einen Fasenwinkel (α) zwischen 35° und 55°, bevorzugt zwischen 40° und 50° aufweist.

5. Deformationsprofil (1) nach einem der Ansprüche 1 bis 4, **dadurch gekennzeichnet, dass** die Oberwand (4) und/oder die Unterwand (5) eine äußere Gesamtfläche aufweist, welche eine sich in einer Horizontalebene planparallel zur Horizontalen erstreckende Planfläche und in den Eckbereichen (9) und/oder in den Eckbereichen (10) geneigt zur Horizontalen verlaufende Eckbereichsflächen umfasst, wobei der Anteil der Planfläche an der Gesamtfläche 30 % bis 65 % beträgt.

6. Deformationsprofilanordnung (13) umfassend ein Deformationsprofil (1) gemäß einem der Ansprüche 1 bis 5 sowie ein Anbauteil (8), **dadurch gekennzeichnet, dass** das Anbauteil (8) lösbar mit der Oberwand (4) oder der Unterwand (5) gekoppelt ist.

7. Stoßfängeranordnung, umfassend einen Querträger und zwei Deformationsprofile nach einem der Ansprüche 1 bis 5, durch welche der Querträger mit einem Fahrzeug verbunden ist, wobei die Deformationsprofile (1) als Mehrkammerprofil ausgebildet sind und wenigstens eine Innenwand (15) aufweisen, welche parallel zur Oberwand (4) und zur Unterwand (5) verläuft, wobei die Innenwand (15) im Längenabschnitt mit einer Sicke (6) einen nach oben oder unten gerichteten Buckel (16) aufweist.

## Claims

1. Deformation profile (1) having two opposing side walls (2, 3), wherein the side walls (2, 3) are connected by an upper wall (4) and a lower wall (5) and both side walls (2, 3) have at least one bead (6) which extends over the entire height (H) of the respective side wall (2, 3), wherein between the side walls (2, 3) and the upper wall (4) an upper corner region (9) is formed in each case and between the side walls (2, 3) and the lower wall (5) a lower corner region (10) is formed in each case, wherein the deformation profile (1) is extruded, **characterized in that** the upper corner regions (9) and/or the lower corner regions (10) have a chamfer (11) in cross-section, wherein the chamfer (11) has a chamfer angle (α) between 25° and 65° and the chamfer (11) in cross-section has a length (L) between 12 and 25 mm.

2. Deformation profile (1) according to claim 1, **characterized in that** two beads (6) are formed opposite each other in the side walls (2, 3) and in the same longitudinal portion.

3. Deformation profile (1) according to claim 1 or 2, **characterized in that** the deformation profile (1) is a crash-box, in particular a multi-chamber crash-box, or a longitudinal beam.

4. Deformation profile (1) according to any one of claims 1 to 3, **characterized in that** the chamfer (11) has a chamfer angle (α) between 35° and 55°, preferably between 40° and 50°.

5. Deformation profile (1) according to any one of claims 1 to 4, **characterized in that** the upper wall (4) and/or the lower wall (5) has/have a total outer surface-area which comprises a planar face which extends in a horizontal plane in a plane-parallel manner with respect to the horizontal and in the corner regions (9) and/or in the corner regions (10) corner region faces which extend in an inclined manner with respect to the horizontal, wherein the proportion of the planar face over the total surface-area is from 30 % to 65 %.

6. Deformation profile arrangement (13) comprising a deformation profile (1) according to any one of claims 1 to 5 and an attachment component (8), **characterized in that** the attachment component (8) is releasably coupled to the upper wall (4) or the lower wall (5).

7. Bumper arrangement comprising a crossbeam and two deformation profiles according to any one of claims 1 to 5, through which the crossbeam is connected to a vehicle, wherein the deformation profiles (1) are in the form of multi-chamber profiles and have at least one inner wall (15) which extends parallel with the upper wall (4) and the lower wall (5), wherein the inner wall (15) in the longitudinal portion with a bead (6) has a boss (16) which is directed upwards or downwards.

## Revendications

1. Profilé de déformation (1), présentant deux parois latérales (2, 3) opposées, dans lequel les parois latérales (2, 3) sont reliées par une paroi supérieure (4) et une paroi inférieure (5) et les deux parois latérales (2, 3) présentent au moins une moulure (6) s'étendant sur la hauteur entière (H) de la paroi latérale (2, 3) respective, dans lequel une zone de coin (9) supérieure est formée respectivement entre les parois latérales (2, 3) et la paroi supérieure (4) et une zone de coin (10) inférieure est formée respectivement entre les parois latérales (2, 3) et la paroi inférieure (5), dans lequel le profilé de déformation (1) est extrudé, **caractérisé en ce que** les zones de coin (9) supérieures et/ou les zones de coin (10) inférieures présentent en section transversale un chanfrein (11), dans lequel le chanfrein (11) présente un angle de chanfrein (α) entre 25° et 65° et le chanfrein (11) présente en section transversale une longueur (L) entre 12 et 25 mm.

2. Profilé de déformation (1) selon la revendication 1, **caractérisé en ce que** deux moulures (6) sont formées à l'opposé dans les parois latérales (2, 3) et dans la même section longitudinale.

3. Profilé de déformation (1) selon la revendication 1 ou 2, **caractérisé en ce que** le profilé de déformation (1) est une boîte de collision, en particulier une boîte de collision à plusieurs chambres ou un longeron.

4. Profilé de déformation (1) selon l'une quelconque des revendications 1 à 3, **caractérisé en ce que** le chanfrein (11) présente un angle de chanfrein (α) entre 35° et 55°, de préférence entre 40° et 50°.

5. Profilé de déformation (1) selon l'une quelconque des revendications 1 à 4, **caractérisé en ce que** la paroi supérieure (4) et/ou la paroi inférieure (5) présente une surface entière extérieure qui comprend une surface plane s'étendant dans un plan horizontal plan et parallèle à l'horizontale et dans les zones de coin (9) et/ou dans les zones de coin (10) des surfaces de zone d'angle inclinées par rapport à l'horizontale, dans lequel la proportion de la surface plane sur la surface entière est comprise entre 30 % et 65 %.

6. Ensemble de profilé de déformation (13) comprenant un profilé de déformation (1) selon l'une quelconque des revendications 1 à 5 ainsi qu'une pièce à rapporter (8), **caractérisé en ce que** la pièce à rapporter (8) est couplée de manière amovible à la paroi supérieure (4) ou à la paroi inférieure (5).

7. Ensemble de pare-chocs comprenant une traverse et deux profilés de déformation selon l'une quelconque des revendications 1 à 5, par lesquels la traverse est reliée à un véhicule, dans lequel les profilés de déformation (1) sont formés comme profilé à plusieurs chambres et présentent au moins une paroi intérieure (15) qui s'étend parallèlement à la paroi supérieure (4) et à la paroi inférieure (5), dans lequel la paroi intérieure (15) présente dans la section longitudinale avec une moulure (6) une bosse (16) dirigée vers le haut ou le bas.
